# EUROPÄISCHE PATENTSCHRIFT

(11) **EP 2 358 995 B1**
(45) Veröffentlichungstag und Bekanntmachung des Hinweises auf die Patenterteilung: **27.03.2013**
(21) Anmeldenummer: 09748944.7
(22) Anmeldetag: 21.09.2009
(51) Int. Cl.: B66D 1/60, F03D 1/00

(54) **VORRICHTUNG ZUM MONTIEREN UND DEMONTIEREN EINES ROTORBLATTS EINER WINDERNERGIEANLAGE**
APPARATUS FOR INSTALLING AND REMOVING A ROTOR BLADE OF A WIND POWER PLANT
DISPOSITIF POUR LE MONTAGE ET LE DÉMONTAGE D'UNE PALE DE ROTOR D'UNE ÉOLIENNE

(30) Priorität: 25.09.2008 DE 102008049025
(43) Veröffentlichungstag der Anmeldung: 24.08.2011
(73) Patentinhaber: Lutz, Otto, 97494 Bundorf (DE)
(72) Erfinder: Lutz, Otto, 97494 Bundorf (DE)
(74) Vertreter: Nunnenkamp, Jörg
(86) Internationale Anmeldenummer: PCT/DE2009/001293
(87) Internationale Veröffentlichungsnummer: WO 2010/034288

(56) Entgegenhaltungen:
- WO-A1-2008/084971
- DE-A1- 10 318 675
- DE-A1-102004 056 340
- DE-U1-202007 002 930

## Beschreibung

Die Erfindung betrifft eine Vorrichtung zum Montieren und Demontieren eines Rotorblatts einer Windenergieanlage, mit wenigstens einer im Bereich des Fußes eines Turms aufzustellenden Seilwinde, ferner mit wenigstens zwei über Schultern der anderen, schräg nach oben weisenden Rotorblätter oder den Bereich eines Spinners geführten Einrichtungen mit von diesen getragenen Umlenkrollen, und mit wenigstens zwei von jeweils einer der Seilwinden aus-und einfahrbaren, über jeweils eine der Umlenkrollen geführten Zugseilen, wobei die Seilwinde in Verlängerung der Achse des nach unten weisenden Rotorblatts angeordnet ist, und wobei eine Blattaufnahme mit Mitteln zum Befestigen der freien Enden der Zugseile und Mitteln zum Umfassen des zu montierenden oder zu demontierenden Rotorblatts an wenigstens zwei voneinander beabstandeten Orten vorgesehen ist.

**Bei einer gattungsgemäßen Vorrichtung entsprechend** der DE 10 2004 056 340 A1 ist ein vom Turmkopf zum Boden gespanntes Führungsmittel vorgesehen. Außerdem nimmt eine zwischen dem Turmkopf und dem Boden angeordnete Halteeinrichtung eine Teillast des Gewichts des zu montierenden oder demontierenden Bauteils während eines Transport des Bauteils zwischen dem Boden und der Windkraftanlage auf. Von der Halteeinrichtung geht wenigstens ein Halteseil zum Bauteil ab, dessen Länge zwischen der Halteeinrichtung und dem Bauteil verändert werden kann. Auf diese Weise soll eine einfache und schonende Montage bzw. Demontage von Bauteilen und insbesondere Rotorblättern der Windkraftanlage ohne Kran ermöglicht werden.

Bei der zuvor beschriebenen Vorrichtung und auch anderen vorbekannten Vorrichtungen stellt sich das Problem einer nicht ausreichenden Stabilität. Denn die schweren Rotorblätter neigen beim Aufziehen bzw. Ablassen zum Pendeln.

Der Erfindung liegt daher das technische Problem zugrunde, eine derartige Vorrichtung so weiter zu bilden, dass die Rotorblätter ohne zu pendeln abgelassen bzw. aufgezogen werden können.

Erfindungsgemäß wird diese Aufgabe durch eine Vorrichtung nach Anspruch 1 gelöst.

Erfindungsgemäß sind neben den Zugseilen von der Seilwinde zu der die Umlenkrollen tragenden Einrichtung gespannte Führungsseile vorgesehen, wobei die Blattaufnahme mit Mitteln zum Führen dieser Führungsseile versehen sind.

Die Mittel zum Aufnehmen des Rotorblatts können mit einer sich über Rollen an dem Turm der Windenergieanlage abstützenden Einrichtung versehen sein.

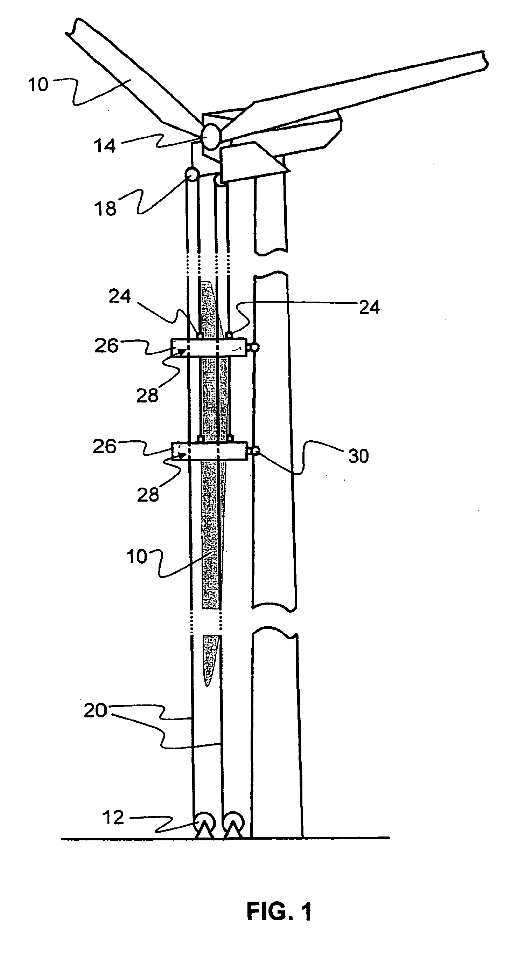

Die Erfindung wird im folgenden anhand einer Zeichnung erläutert, deren einzige Figur eine Windenergieanlage mit einer derartigen Vorrichtung zeigt.

Im Bereich des Fußes des Turms in der Verlängerung der Achse des nach unten weisenden, zu montierenden oder zu demontierenden Rotorblatts 10 ist eine Seilwinde 12 angeordnet. Zwei über die Schultern der anderen, schräg nach oben weisenden Rotorblätter 10 gerührte oder in dem Bereich des Spinners der Gondel befestigte Einrichtungen 16 sind mit von diesen getragenen Umlenkrollen 18 versehen sind. Zwei von der - hier mit zwei gesonderten Seiltrommeln versehene - Seilwinde 12 aus- und einfahrbare Zugseile 20 sind über jeweils eine der Umlenkrollen 18 geführt. Eine Blattaufnahme 22 ist mit Mitteln 24 zum Befestigen der freien Enden der Zugseile, Mitteln 26 zum Umfassen des zu montierenden oder zu demontierenden Rotorblatts an wenigstens zwei voneinander beabstandeten Orten und Mitteln zum Führen des aufsteigenden Abschnitts der Zugseile 20 versehen.

Zu Aufziehen eines Rotorblatts 12 werden zunächst die Einrichtungen 16 über die Schultern der beiden schräg nach oben weisenden Rotorblätter 10 geführt oder aber an dem Spinner der Gondel befestigt. sodann werden die Zugseile 20 um die Umlenkrollen 18 geführt. Die Blatttaufnahme 22 wird auf das aufzuziehende Rotorblatt 10 dieses gegen ein Verrutschen gesichert aufgeschoben, die einen Enden der Zugseile 20 werden an der Blattaufnahme festgelegt. Die anderen Enden der Zugseile werden durch die Führungen (28) der Blattaufnahme geführt und auf der Trommel (oder dem Trommeln) der Seilwinde (12) befestigt. Durch Betätigen der Seilwinde 12 werden die Zugseile 20 angezogen, die über die Umlenkrollen geführten Abschnitte der Zugseile 20 ziehen die Blattaufnahme mitsamt dem von dieser getragenen Rotorblatt nach oben bis in eine Position, in der das Rotorblatt (von dem Inneren der Nabe aus) an die Nabe angeschraubt werden kann.

Bei der Demontage eines Blatts wird die Blattaufnahme entsprechend aufgezogen, wobei es sich auf das zu demontierende Rotorblatt aufschiebt. Nach Lösen der Verschraubung des Rotorblatts an der Nabe wird die Blattaufnahme durch Betätigung der Seilwinde abgelassen.

Die Blattaufnahme 22 kann auch durch einen Rahmen gebildet sein, der mit einem Schwenkmechanismus versehen ist, welcher im Bereich des Schwerpunkts des das Rotorblatt aufnehmenden Rahmens an den Rahmen zu diesem um 90° verschwenkbar angesetzt und mit einer Ausbildung zur Aufnahme eines Kranhakens versehen ist, wie er in der DE 10 2008 033 857 beschrieben ist; eine solche Ausgestaltung der Blattaufnahme erleichtert das Verbringen des zu montierenden Rotorblatts aus der horizontalen Ausrichtung in die vertikale Aurichtung und umgekehrt das Ablegen des demontierten Rotorblatts.

Bei dem dargestellten Ausführungsbeispiel bestehen die Mittel 26 zum Umfassen des zu montierenden Rotorblatts 10 aus zwei Elementen 26' und 26" die das Rotorblatt 10 in unterschiedlicher umgreifen. Diese Elemente 26', 26" sind mit Mitteln zum Führen des von der Seilwinde 12 zu den Umlenkrollen 18 verlaufenden Abschnitts des Zugseils 20 versehen (im einfachsten Fall schlichte Durchführungen, vorzugsweise aber Seilführungsrollen), was einem Pendeln des Rotorblatts entgegenwirkt.

Nicht dargestellt sind weitere Führungsseile, die von der Seilwinde 12 zu den Einrichtungen 16 gespannt sind, die in entsprechender Weise von der Blattaufnahme 22 geführt werden und diese damit stabilisieren.

Eine weitere Stabilisierung erfolgt durch das Versehen der Blattaufnahme 22 mit einer sich über Rollen 30 an dem Turm der Windenergieanlage abstützenden Einrichtung.

Statt lediglich zwei Zugseilen können auch mehr, beispielsweise vier Zugseile vorgesehen sein.

Insbesondere die obere der Blattaufnahmen kann als (vorzugsweise überdachte) Arbeitsbühne ausgebildet sein.

Zeichnerisch nicht dargestellt ist eine Ausführungsform, bei der eine weitere Seilwinde vorgesehen ist, die es erlaubt, unter Einsatz von einem (oder auch zwei) weiteren Seilen, das im Bereich der Blattspitze an das Blatt angebracht ist, die Spitze des Blatts vom Turm weg in die Waagerechte zu ziehen.

Die Blattaufnahme kann weiter mit einem Köcher versehen sein, der die Spitze des Rotorblatts aufnimmt. Dieser Köcher kann netzartig mit sich kreuzenden Bändern ausgebildet sein, die in ihren Kreuzungspunkten mit einem Kantenschutz versehen sind, die eine gute Krafteinleitung sicherstellen.

Insbesondere bei erheblich vorgebogenen Blättern kann der Köcher mit Vakuumsaugern versehen sein, über die etwa zum Aufziehen und Ablassen erforderliche weitere Haltekräfte auf das Blatt aufgebracht werden können.

## Patentansprüche

1. Vorrichtung zum Montieren und Demontieren eines Rotorblatts (10) einer Windenergieanlage, mit
- wenigstens einer im Bereich des Fußes eines Turms aufzustellenden Seilwinde (12), ferner mit
- wenigstens zwei über Schultern (14) von zwei schräg nach oben weisenden Rotorblättern (10) zu führenden oder im Bereich eines Spinners zu befestigenden Einrichtungen (16) mit von diesen im getragenen Umlenkrollen (18), und mit
- wenigstens zwei von jeweils einer der Seilwinden (12) aus- und einfahrbaren, über jeweils eine der Umlenkrollen (18) geführten Zugseilen (20), wobei
- die Seilwinde (12) in Verlängerung der Achse eines nach unten weisenden Rotorblatts (10) anzuordnen ist, und wobei
- eine Blattaufnahme (22) mit
Mitteln (24) zum Befestigen der freien Enden der Zugseile (20) und
Mitteln (26) zum Umfassen des zu montierenden oder zu demontierenden Rotorblatts (10) an wenigstens zwei voneinander beabstandeten Orten
vorgesehen ist,
**dadurch gekennzeichnet, dass**
- die Blattaufnahme (22) zusätzlich Mittel (28) zum Führen des aufsteigenden Abschnitts der Zugseile (20) aufweist und
- neben den Zugseilen (20) von dem Bereich des Fußes des Turms zu der die Umlenkrollen (18) tragenden Einrichtung (16) zu spannende Führungsseile vorgesehen sind und die Blattaufnahme mit Mitteln zum Führen dieser Führungsseile versehen ist.

2. Vorrichtung nach Anspruch 1, **dadurch gekennzeichnet, dass** die Mittel zum Aufnehmen des Rotorblatts (10) mit einer sich über Rollen (30) an dem Turm abstützenden Einrichtung (32) versehen sind.

3. Vorrichtung nach Anspruch 1 oder 2, **dadurch gekennzeichnet, dass** die eine der Blattaufnahmen als Arbeitsbühne ausgebildet ist.

4. Vorrichtung nach Anspruch 3, **dadurch gekennzeichnet, dass** die Arbeitsbühne überdacht ist.

5. Vorrichtung nach einem der Ansprüche 1 bis 4, **gekennzeichnet durch** eine weitere Seilwinde, die es erlaubt, unter Einsatz von wenigstens einem weiteren Seil, das im Bereich der Blattspitzes an das Blatt anzubringen ist, die Spitze des Blatts vom Turm weg in die Waagerechte zu ziehen.

6. Vorrichtung nach einem der Ansprüche 1 bis 5, **dadurch gekennzeichnet, dass** die Blattaufnahme mit zur Aufnahme der Blattspitze eingerichteten Köcher versehen ist.

7. Vorrichtung nach Anspruch 6, **dadurch gekennzeichnet, dass** der Köcher mit Vakuumsaugern versehen ist, über die zum Aufziehen und Ablassen erforderliches, weitere Haltekräfte auf das Blatt aufgebracht werden können.

## Claims

1. A device for mounting and unmounting a rotor blade (10) of a wind energy installation, with
- at least one cable winch (12) to be set up in the region of the base of a tower, further with
- at least two apparatuses (16) to be guided over shoulders (14) of two obliquely upwardly pointing rotor blades (10) or to be fastened in the region of a spinner, with two return pulleys (18) carried by the same, and with
- at least two traction cables (20) which can be reeled out and in by one of the cable winches (12) in each case guided by means of one of the return pulleys (18) in each case, wherein
- the cable winch (12) is to be arranged such that it extends the axis of a downwardly pointing rotor blade (10), and wherein
- a blade receptacle (22) with
means (24) for fastening the free ends of the traction cables (20) and
means (26) for grasping the rotor blade (10) to be mounted or to be unmounted in at least two mutually spaced locations
is provided,
**characterised in that**
- the blade receptacle (22) additionally has means (28) for guiding the rising section of the traction cables (20) and
- in addition to the traction cables (20), guide cables to be stretched from the region of the base of the tower to the apparatus (16) carrying the return pulleys (18) are provided and the blade receptacle is provided with means for guiding these guide cables.

2. The device according to Claim 1, **characterised in that** the means for accommodating the rotor blade (10) are provided with an apparatus (32) to be supported on the tower by means of pulleys (30).

3. The device according to Claim 1 or 2, **characterised in that** one of the blade receptacles is constructed as a work platform.

4. The device according to Claim 3, **characterised in that** the work platform is roofed.

5. The device according to one of Claims 1 to 4, **characterised by** a further cable winch which enables the pulling of the tip of the blade away from the tower to the horizontal using at least one further cable which is to be attached to the blade in the region of the blade tip.

6. The device according to one of Claims 1 to 5, **characterised in that** the blade receptacle is provided with a holder set up for accommodating the blade tip.

7. The device according to Claim 6, **characterised in that** the holder is provided with vacuum cups, by means of which further retaining forces can be applied to the blade, which are required for lifting and lowering.

## Revendications

1. Dispositif de montage et démontage d'une pale de rotor (10) d'une installation d'énergie éolienne, comportant
- au moins un treuil (12) à installer au niveau du pied d'un pylône, comportant en outre
- au moins deux dispositifs (16) à guider par l'intermédiaire des épaulements (14) de deux lames de rotor (10) dirigées en oblique vers le haut ou à fixer au niveau d'un nez de rotor comportant des rouleaux de renvoi (18) soutenus par ceux-ci, et comportant
- au moins deux câbles de treuil (20) déployables et rétractables depuis au moins un des treuils (12), guidés par l'intermédiaire de respectivement un des rouleaux de renvoi (18), dans lequel
- le treuil (12) est à disposer dans le prolongement de l'axe d'une pale de rotor (10) dirigée vers le bas, et dans lequel
- un réceptacle de pale (22) avec
des moyens (24) pour fixer les extrémités libres du câbles de treuil (20) et
des moyens (26) pour englober la pale de rotor (10) à monter ou à démonter sont prévus à au moins deux emplacements espacés l'un de l'autre,
**caractérisé en ce que**
- le réceptacle de pale (22) présente en outre des moyens (28) pour guider la portion ascendante du câble de treuil (20) et
- à côté des câbles de treuil (20) des câbles de guidage sont prévus depuis la zone du pied du pylône vers le dispositif (16) portant les rouleaux de renvoi (18) et le réceptacle de pale est pourvu de moyens pour guider ces câbles de guidage.

2. Dispositif selon la revendication 1, **caractérisé en ce que** les moyens pour recevoir la pale de rotor (10) sont pourvus d'un dispositif (32) s'appuyant par l'intermédiaire de rouleaux (30) sur le pylône.

3. Dispositif selon les revendications 1 ou 2, **caractérisé en ce que** un des réceptacles de pale est conçu comme une plate-forme de travail.

4. Dispositif selon la revendication 3, **caractérisé en ce que** la plate-forme de travail est couverte d'un toit.

5. Dispositif selon une des revendications 1 à 4, **caractérisé par** un treuil supplémentaire, qui permet, en employant au moins un câble supplémentaire, qui doit être monté au niveau de la pointe de pale sur la pale, de tirer à l'horizontale la pointe de la pale en l'éloignant du pylône.

6. Dispositif selon une des revendications 1 à 5, **caractérisé en ce que** le réceptacle de pale est pourvu d'étuis conçus afin de recevoir la pointe de pale.

7. Dispositif selon la revendication 6, **caractérisé en ce que** les étuis sont pourvus de ventouses à vide, par l'intermédiaire desquelles des forces de retenue supplémentaires requises pour retenir et relâcher peuvent être appliquées sur la pale.
